# EUROPEAN PATENT SPECIFICATION

(11) **EP 4 037 407 B1**
(45) Date of publication and mention of the grant of the patent: **28.10.2026**
(21) Application number: 20869204.6
(22) Date of filing: 11.06.2020
(51) Int. Cl.: H04W 4/40, H04W 72/21, H04W 28/02, H04W 72/56, H04W 92/10, H04W 92/18

(54) **METHOD FOR BUFFER STATUS REPORT, AND TERMINAL**
VERFAHREN ZUR PUFFERZUSTANDSMELDUNG UND ENDGERÄT
PROCÉDÉ POUR RAPPORT D'ÉTAT DE TAMPON ET TERMINAL

(30) Priority: 25.09.2019 CN 201910910220
(43) Date of publication of application: 03.08.2022
(73) Proprietor: Datang Mobile Communications Equipment Co., Ltd., Beijing 100085 (CN)
(72) Inventor: WANG, Da, Beijing 100085 (CN); ZHAO, Yali, Beijing 100085 (CN)
(74) Representative: Ipsilon
(86) International application number: PCT/CN2020/095658
(87) International publication number: WO 2021/057100

(56) References cited:
- CN-A- 109 891 987
- CN-A- 109 891 987
- CN-A- 110 139 388
- US-A1- 2017 245 245
- US-A1- 2020 045 724
- ERICSSON: "gNB-Scheduled Resource Allocation for Sidelink", vol. RAN WG2, no. Reno, USA; 20190513 - 20190517, 2 May 2019 (2019-05-02), pages 1 - 4, XP051711639, Retrieved from the Internet <URL:http://www.3gpp.org/ftp/tsg%5Fran/WG2%5FRL2/TSGR2%5F106/Docs/R2%2D1907354%2Ezip> [retrieved on 20190502]
- HUAWEI ET AL: "Discussion on SL BSR procedure for NR SL Mode-1", vol. RAN WG2, no. Reno, USA; 20190513 - 20190517, 2 May 2019 (2019-05-02), pages 1 - 8, XP051711731, Retrieved from the Internet <URL:http://www.3gpp.org/ftp/tsg%5Fran/WG2%5FRL2/TSGR2%5F106/Docs/R2%2D1907449%2Ezip> [retrieved on 20190502]
- ERICSSON: "Discussion on SL Mode 1 left issues", 3GPP DRAFT; R2-1913325- DISCUSSION ON SL MODE 1 LEFT ISSUES, vol. RAN WG2, 3 October 2019 (2019-10-03), Chongqing, China, pages 1 - 7, XP051791331
- ERICSSON: "gNB-Scheduled Resource Allocation for Sidelink", 3GPP TSG-RAN WG2 #106 R2-1907354, vol. RAN WG2, 2 May 2019 (2019-05-02), Reno, USA, pages 1 - 4, XP051711639
- HUAWEI, HISILICON: "Discussion on SL BSR procedure for NR SL Mode-1", 3GPP DRAFT; R2-1907449 DISCUSSION ON THE SL BSR FOR MODE 1, vol. RAN WG2, 2 May 2019 (2019-05-02), Reno, USA, pages 1 - 8, XP051711731

## Description

### Field

The present application relates to the field of wireless communication technologies, and in particular to a method and terminal for Buffer Status reporting.

### Background

The vehicle to everything (V2X) technology can perceive the surrounding conditions of vehicles in real time, share the road information and provide timely warnings via wireless communications between vehicles, between vehicles and road test infrastructure, and between vehicles and passersby.

In the existing Long Term Evolution (LTE) V2X technology (that is, Rel-14 LTE V2X technology), the broadcast communication of the PC5 interface (also called sidelink, which is described as Sidelink in protocol) that transmits data between User Equipments (UEs) can already support the transmission of basic services based on road safety.

With the further development of Internet of Vehicles technology, some new application scenarios appear in the New Radio (NR) V2X current phase compared to the LTE V2X, such as: vehicle formation, advanced driving, sensor information sharing, remote control and other applications. It can be seen that there are many delay-sensitive services in the NR V2X, and the delay requirements thereof are relatively high. When a terminal UE reports the buffer status, it is hoped that the Sidelink resources allocated by the base station can be obtained faster, so as to better ensure the Quality of Service (QoS) of the Sidelink interface services. But the Uu interface (the link from the UE to the base station) also has delay-sensitive services and also needs to apply for resources from the base station as soon as possible. Therefore, when the terminal needs to send the Buffer Status reporting (BSR) of the Sidelink and the BSR of the Uu interface simultaneously, the terminal will always send the BSR of the Uu interface preferentially if the resources allocated by the base station are not enough, thereby affecting the transmission delay of sidelink services.

A Document (Ericsson: "gNB-Scheduled Resource Allocation for Sidelink", 3GPP TSG-RAN WG2 #106, Reno, USA, 13th-17th May 2019; R2-1907354 relates to " gNB-Scheduled Resource Allocation for Sidelink ".

The China Patent Publication No. CN 109891987 A1 relates a method, apparatus and computer program for scheduled transmission. The method realized at terminal device includes: to receive the scheduling configuration transmitted for the device-to-device D2D of the terminal device from the network equipment; The uplink scheduling grant transmitted for the cellular uplink in the same time resource Chong Die with D2D transmission is received from the network equipment; Based in following item at least one of determine that described D2D transmits dispatching priority transmit relative to the cellular uplink: the associated priority of the scheduling configuration is compared with first between the first priority threshold value and transmission limits; At least one of the D2D transmission and cellular uplink transmission are executed with based on identified dispatching priority. Using embodiment of the disclosure, D2D transmission and cellular uplink transmission from terminal device can be coordinated well.

A Document (Huawei, HiSilicon: "Discussion on SL BSR procedure for NR SL Mode-1", 3GPP TSG-RAN WG2 Meeting #106, Reno, USA, 13th -17th May 2019; R2-1907449 relates to "Discussion on SL BSR procedure for NR SL Mode-1".

### Summary

The present application provides a method and terminal for Buffer Status reporting, which can dynamically determine the sending of the BSR of the sidelink interface and the BSR of the Uu interface when the terminal needs to send the BSR of the sidelink interface and the BSR of the Uu interface simultaneously, and ensure the quality of service of the Uu interface and Sidelink interface services.

In a first aspect, embodiments of the present application provide a method for Buffer Status reporting, including:
determining, by a terminal, a priority order of logical channels of a Uu interface and a sidelink interface which triggers BSRs; where the terminal compares a priority parameter of a logical channel of the Uu interface which triggers BSR with a first priority threshold, and, the terminal compares a priority parameter of a logical channel of the sidelink interface which triggers BSR with a second priority threshold, the first priority threshold and the second priority threshold are different; and the terminal determines the priority order of the logical channels of the Uu interface and the sidelink interface which triggers the BSRs according to a result of the comparing; and
sending, by the terminal, the BSRs according to the priority order of the logical channels of the Uu interface and the sidelink interface which triggers the BSRs.

In some embodiments, the determining, by the terminal, the priority order of the logical channels of the Uu interface and the sidelink interface which triggers the BSRs according to the result of the comparing, includes:
determining that a priority of the logical channel of the Uu interface which triggers BSR is higher than a priority of the logical channel of the sidelink interface which triggers BSR, when the priority parameter of the logical channel of the Uu interface which triggers BSR is lower than the first priority threshold; or
determining that a priority of the logical channel of the sidelink interface which triggers BSR is higher than a priority of the logical channel of the Uu interface which triggers BSR, when the priority parameter of the logical channel of the Uu interface which triggers BSR is not lower than the first priority threshold and the priority parameter of the logical channel of the sidelink interface which triggers BSR is lower than the second priority threshold; or
determining that a priority of the logical channel of the Uu interface which triggers BSR is higher than a priority of the logical channel of the sidelink interface which triggers BSR, when the priority parameter of the logical channel of the Uu interface which triggers BSR is not lower than the first priority threshold and the priority parameter of the logical channel of the sidelink interface which triggers BSR is not lower than the second priority threshold.

In some embodiments, the determining, by the terminal, the priority order of the logical channels of the Uu interface and the sidelink interface which triggers the BSRs according to the result of the comparing, includes:
determining that a priority of the logical channel of the sidelink interface which triggers BSR is higher than a priority of the logical channel of the Uu interface which triggers BSR, when the priority parameter of the logical channel of the sidelink interface which triggers BSR is lower than the second priority threshold; or
determining that a priority of the logical channel of the Uu interface which triggers BSR is higher than a priority of the logical channel of the sidelink interface which triggers BSR, when the priority parameter of the logical channel of the sidelink interface which triggers BSR is not lower than the second priority threshold and the priority parameter of the logical channel of the Uu interface which triggers BSR is lower than the first priority threshold; or
determining that a priority of the logical channel of the sidelink interface which triggers BSR is higher than a priority of the logical channel of the Uu interface which triggers BSR, when the priority parameter of the logical channel of the sidelink interface which triggers BSR is not lower than the second priority threshold and the priority parameter of the logical channel of the Uu interface which triggers BSR is not lower than the first priority threshold.

In some embodiments, the determining, by the terminal, the priority order of the logical channels of the Uu interface and the sidelink interface which triggers the BSRs, includes:
comparing, by the terminal, a priority parameter of a logical channel of the Uu interface which triggers BSR with a third priority threshold;
determining that a priority of the logical channel of the Uu interface which triggers BSR is higher than a priority of the logical channel of the sidelink interface which triggers BSR, when the priority parameter of the logical channel of the Uu interface which triggers BSR is lower than the third priority threshold; or
determining that a priority of the logical channel of the sidelink interface which triggers BSR is higher than a priority of the logical channel of the Uu interface which triggers BSR, when the priority parameter of the logical channel of the Uu interface which triggers BSR is not lower than the third priority threshold.

In some embodiments, the determining, by the terminal, the priority order of the logical channels of the Uu interface and the sidelink interface which triggers the BSRs, includes:
comparing, by the terminal, a priority parameter of a logical channel of the sidelink interface which triggers BSR with a fourth priority threshold;
determining that a priority of the logical channel of the sidelink interface which triggers BSR is higher than a priority of the logical channel of the Uu interface which triggers BSR, when the priority parameter of the logical channel of the sidelink interface which triggers BSR is lower than the fourth priority threshold; or
determining that a priority of the logical channel of the Uu interface which triggers BSR is higher than a priority of the logical channel of the sidelink interface which triggers BSR, when the priority parameter of the logical channel of the sidelink interface which triggers BSR is not lower than the fourth priority threshold.

In some embodiments, sending, by the terminal, the BSRs according to the priority order of the logical channels of the Uu interface and the sidelink interface which triggers the BSRs, includes:
sending a BSR of the Uu interface, when the priority of the logical channel of the Uu interface which triggers BSR is higher than the priority of the logical channel of the sidelink interface which triggers BSR; or
sending a BSR of the sidelink interface, when the priority of the logical channel of the sidelink interface which triggers BSR is higher than the priority of the logical channel of the Uu interface which triggers BSR; or
sending a BSR of the Uu interface and a BSR of the sidelink interface randomly, when the priority of the logical channel of the Uu interface which triggers BSR is same as the priority of the logical channel of the sidelink interface which triggers BSR.

In a second aspect, embodiments of the present application further provide a device for Buffer Status reporting, including:
a priority determining module and a BSR sending module, where:
the priority determining module is configured to determine a priority order of logical channels of a Uu interface and a sidelink interface which triggers BSRs; and
the BSR sending module is configured to send the BSRs according to the priority order of the logical channels of the Uu interface and the sidelink interface which triggers the BSRs;
the priority determining module is further configured to:
   compare a priority parameter of a logical channel of the Uu interface which triggers BSR with a first priority threshold, and compare a priority parameter of a logical channel of the sidelink interface which triggers BSR with a second priority threshold, where the first priority threshold and the second priority threshold are different; and
   determine the priority order of the logical channels of the Uu interface and the sidelink interface which triggers the BSRs according to a result of the comparing.

In some embodiments, the priority determining module is configured to:
determine that a priority of the logical channel of the Uu interface which triggers BSR is higher than a priority of the logical channel of the sidelink interface which triggers BSR, when the priority parameter of the logical channel of the Uu interface which triggers BSR is lower than the first priority threshold; or
determine that a priority of the logical channel of the sidelink interface which triggers BSR is higher than a priority of the logical channel of the Uu interface which triggers BSR, when the priority parameter of the logical channel of the Uu interface which triggers BSR is not lower than the first priority threshold and the priority parameter of the logical channel of the sidelink interface which triggers BSR is lower than the second priority threshold; or
determine that a priority of the logical channel of the Uu interface which triggers BSR is higher than a priority of the logical channel of the sidelink interface which triggers BSR, when the priority parameter of the logical channel of the Uu interface which triggers BSR is not lower than the first priority threshold and the priority parameter of the logical channel of the sidelink interface which triggers BSR is not lower than the second priority threshold.

In some embodiments, the priority determining module is configured to:
determine that a priority of the logical channel of the sidelink interface which triggers BSR is higher than a priority of the logical channel of the Uu interface which triggers BSR, when the priority parameter of the logical channel of the sidelink interface which triggers BSR is lower than the second priority threshold; or
determine that a priority of the logical channel of the Uu interface which triggers BSR is higher than a priority of the logical channel of the sidelink interface which triggers BSR, when the priority parameter of the logical channel of the sidelink interface which triggers BSR is not lower than the second priority threshold and the priority parameter of the logical channel of the Uu interface which triggers BSR is lower than the first priority threshold; or
determine that a priority of the logical channel of the sidelink interface which triggers BSR is higher than a priority of the logical channel of the Uu interface which triggers BSR, when the priority parameter of the logical channel of the sidelink interface which triggers BSR is not lower than the second priority threshold and the priority parameter of the logical channel of the Uu interface which triggers BSR is not lower than the first priority threshold.

In some embodiments, the priority determining module is configured to:
compare a priority parameter of a logical channel of the Uu interface which triggers BSR with a third priority threshold;
determine that a priority of the logical channel of the Uu interface which triggers BSR is higher than a priority of the logical channel of the sidelink interface which triggers BSR, when the priority parameter of the logical channel of the Uu interface which triggers BSR is lower than the third priority threshold; or
determine that a priority of the logical channel of the sidelink interface which triggers BSR is higher than a priority of the logical channel of the Uu interface which triggers BSR, when the priority parameter of the logical channel of the Uu interface which triggers BSR is not lower than the third priority threshold.

In some embodiments, the priority determining module is configured to:
compare a priority parameter of a logical channel of the sidelink interface which triggers BSR with a fourth priority threshold;
determine that a priority of the logical channel of the sidelink interface which triggers BSR is higher than a priority of the logical channel of the Uu interface which triggers BSR, when the priority parameter of the logical channel of the sidelink interface which triggers BSR is lower than the fourth priority threshold; or
determine that a priority of the logical channel of the Uu interface which triggers BSR is higher than a priority of the logical channel of the sidelink interface which triggers BSR, when the priority parameter of the logical channel of the sidelink interface which triggers BSR is not lower than the fourth priority threshold.

In some embodiments, the BSR sending module is configured to:
send a BSR of the Uu interface, when the priority of the logical channel of the Uu interface which triggers BSR is higher than the priority of the logical channel of the sidelink interface which triggers BSR; or
send a BSR of the sidelink interface, when the priority of the logical channel of the sidelink interface which triggers BSR is higher than the priority of the logical channel of the Uu interface which triggers BSR; or
send a BSR of the Uu interface and a BSR of the sidelink interface randomly, when the priority of the logical channel of the Uu interface which triggers BSR is same as the priority of the logical channel of the sidelink interface which triggers BSR.

In a third aspect, embodiments of the present application further provide a computer storage medium storing a computer program thereon, where the program, when executed by a processor, implements the steps of the method described in the first aspect.

These and other aspects of the present application will be more clear and easy to understand in the description of the following embodiments.

### Brief Description of the Drawings

In order to illustrate the technical solutions in embodiments of the present application more clearly, the accompanying figures which need to be used in describing embodiments will be introduced below briefly. Obviously the accompanying figures described below are only some embodiments of the present application, and other accompanying figures can also be obtained by those ordinary skilled in the art according to these accompanying figures without creative labor.
Fig. 1 is a schematic diagram of a communication mode of a cellular network according to an embodiment of the present application.
Fig. 2 is a schematic diagram of a sidelink mode according to an embodiment of the present application.
Fig. 3 is a system for Buffer Status reporting according to an embodiment of the present application.
Fig. 4 is a schematic diagram of interaction of Buffer Status reporting according to an embodiment of the present application.
Fig. 5 is a flowchart of a method for Buffer Status reporting according to an embodiment of the present application.
Fig. 6 is a schematic diagram of a terminal for Buffer Status reporting according to an embodiment of the present application.
Fig. 7 is a schematic diagram of a device for Buffer Status reporting according to an embodiment of the present application.

### Detailed Description of the Embodiments

A method for resource configuration during cell handover provided in embodiments of the present application may be applied to a network side device, and may also be applied to a terminal.

It should be noted that the terminal is a device with the wireless communication function, and can be deployed on land, including indoor or outdoor, handheld or vehicle-mounted; or can also be deployed on the water (such as ship, etc.); or can also be deployed in the air (e.g., on the airplane, balloon and satellite, etc.). The terminal may be: mobile phone, Pad, computer with wireless transceiver function, Virtual Reality (VR) terminal, Augmented Reality (AR) terminal, wireless terminal in the industrial control, wireless terminal in the self-driving, wireless terminal in the remote medical, wireless terminal in the smart grid, wireless terminal in the transportation safety, wireless terminal in the smart city, wireless terminal in the smart home, etc.; or may be various forms of UE, Mobile Station (MS), terminal device.

The network side device may be a 4G base station, such as LTE, eLTE, ng-eNB, etc., or may be a 5G gNB, en-gNB, macro base station, micro base station, Central Unit (CU) or Distributed Unit (DU), etc.

The term "and/or" in the embodiments of the present application describes the association relationship of associated objects, indicating that there may be three relationships, for example, A and/or B may represent: only A, both A and B, and only B. The character "/" generally indicates that the associated objects have a kind of "or" relationship.

The application scenarios described in embodiments of the present application are intended to illustrate the technical solutions of embodiments of the present application more clearly, and do not constitute a limitation on the technical solutions provided in embodiments of the present application. As can be known by those ordinary skilled in the art, with the appearance of new application scenarios, the technical solutions provided in embodiments of the present application are also applicable to similar technical problems.

The relevant background of the cellular network communication and sidelink will be introduced at first below.

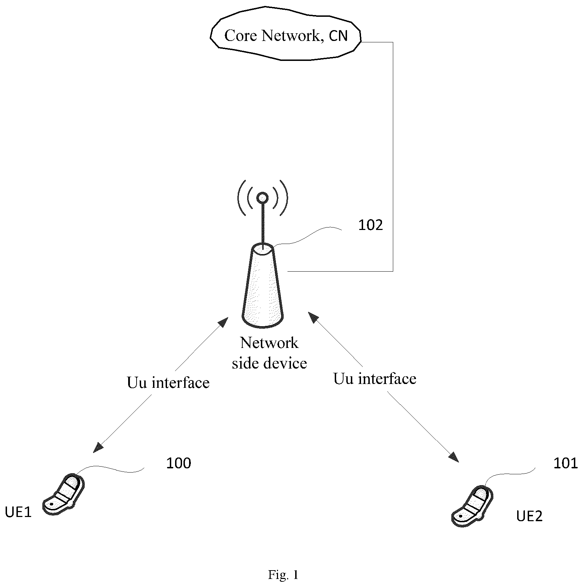

As shown in Fig. 1, a cellular network communication method is used in the traditional wireless communication, that is, the transmission of the uplink and downlink data information or control information is performed between a terminal 100 and a network side device 102 through the Uu interface, and the transmission of the uplink and downlink data information or control information is performed between a terminal 101 and the network side device 102.

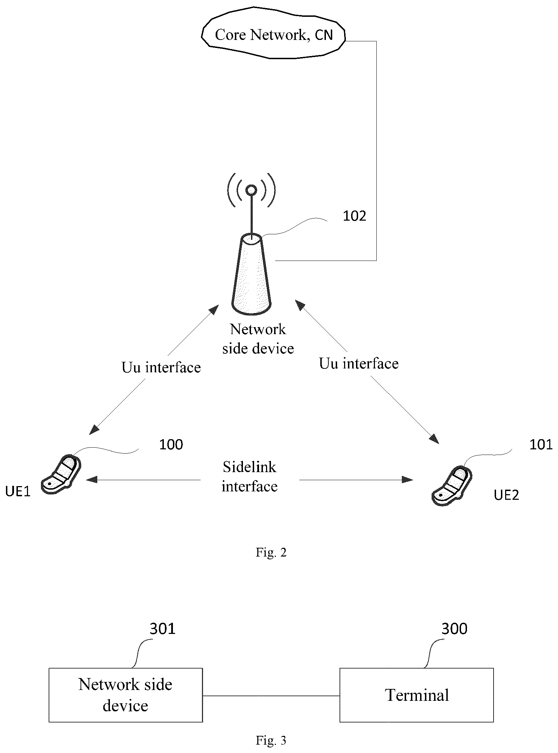

As shown in Fig. 2, the sidelink refers to a way in which neighboring terminals can transmit data through a sidelink (also called Sidelink) within a short range, and the radio interface corresponding to the Sidelink is called sidelink interface, which is also called Sidelink interface. The terminal 100 and the terminal 101 that are close to each other allow the sidelink between devices.

The Buffer Status reporting (BSR) is used to provide a serving base station with how much data to be sent by a terminal is stored in the to-be-sent buffer, so that the serving base station schedules uplink resources. When the terminal determines that there is uplink data to be sent in a logical channel, the sending of a BSR message may be triggered.

The LCP mechanism of the LTE system will be illustrated below.

The Logical Channel Prioritization (LCP) is a process in which a terminal organizes uplink data packets for a uplink scheduling grant (UL grant) allocated by the network side.

In the LCP process, the priority sequence between the Media Access Control-Control Element (MAC CE) and the data from logical channels is fixed, and the priority sequence is as follows:
MAC control element for C-RNTI (Cell-Radio Network Temporary Identifier) or data from UL-CCCH (Uplink Common Control CHannel);
MAC control element for DPR (Data capacity and Power headroom Report);
MAC control element for SPS (Semi-Persistent Scheduling) confirmation;
MAC control element for AUL (Automatic Uplink) confirmation;
MAC control element for BSR, with exception of BSR included for padding;
MAC control element for PHR (Power Headroom Report), Extended PHR, or Dual Connectivity PHR;
MAC control element for Sidelink BSR, with exception of Sidelink BSR included for padding;
Data from any Logical Channel, except data from UL-CCCH;
MAC control element for Recommended bit rate query;
MAC control element for BSR included for padding;
MAC control element for Sidelink BSR included for padding.

For the data from logical channels, the specific LCP process is as follows.

Step 1: performing a first round of resource allocation in a descending order of priority parameters of all logical channels with tokens.

The first round of resource allocation is based on the Prioritized Bit Rate (PBR) of each logical channel, and the number of tokens available for each logical channel is updated according to the resource allocation.

Step 2: performing a second round of resource allocation if there are remaining resources.

The second round of resource allocation is to allocate resources for the data other than PBR in a descending order of priority parameters of all logical channels with data transmission, and the resource allocation ends until the data of all logical channels with tokens is allocated with resources or the resources run out.

It can be seen from the above LCP mechanism of the LTE system that the priority order is fixed for the BSR MAC CE of the sidelink interface and the BSR MAC CE of the Uu interface at present, that is, the priority of the BSR MAC CE of the Uu interface is always higher than that of the BSR MAC CE of the sidelink interface. That is to say, if the resources allocated by the base station are not enough, the terminal will always send the BSR MAC CE of the Uu interface preferentially, thus affecting the transmission delay of sidelink interface services.

In order to solve the above technical problem, the present application proposes a method for Buffer Status reporting, which ensures that the terminal can determine the sending of the BSR of the sidelink interface and the BSR of the Uu interface dynamically when it needs to send the BSR of the sidelink interface and the BSR of the Uu interface simultaneously, and ensures that the quality of service of the Uu interface and Sidelink interface services can be applied to a system including a terminal and a network side device. The implementation steps of the system will be illustrated below.

As shown in Fig. 3, the system includes a terminal 300 and a network side device 301. Taking the LCP process of the NR system as an example, an interaction process between the terminal 300 and the network side device 301 during the Buffer Status reporting process is illustrated.

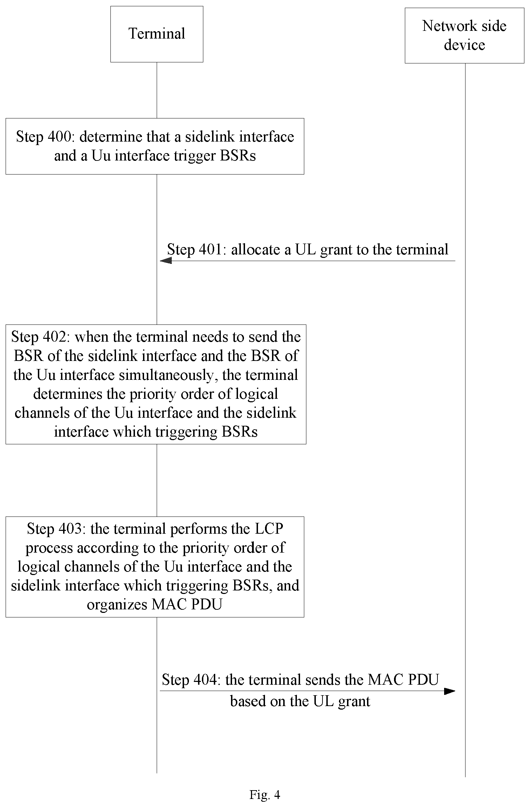

As shown in Fig. 4, the interaction process between the terminal and the network side device during the Buffer Status reporting process is as follows.

Step 400: the terminal determines that a sidelink interface and a Uu interface trigger BSRs according to the existing protocol standard.

Step 401: the network side device allocates a UL grant to the terminal.

Step 402: if the terminal needs to send the BSR of the sidelink interface and the BSR of the Uu interface simultaneously, the terminal determines the priority order of logical channels of the Uu interface and the sidelink interface which triggering BSRs.

Step 403: the terminal performs the LCP process according to the priority order of logical channels of the Uu interface and the sidelink interface which triggering BSRs, and organizes the Medium Access Control (MAC) Protocol Data Unit (PDU).

In an implementation, if the UL grant can only carry the BSR MAC CE of one interface, the terminal may implement in the following manner.

When the priority of the logical channel of the Uu interface which triggering BSR determined according to step 402 is higher, the UL grant carries the BSR MAC CE of the Uu interface, and the terminal only cancels the pending Up Link Scheduling Request (UL SR) and stops the SR prohibition timer corresponding to the UL SR.

When the priority of the logical channel of the sidelink interface which triggering BSR determined according to step 402 is higher, the UL grant carries the BSR MAC CE of the sidelink (sidelink interface), and the terminal only cancels the pending sidelink SR and stops the SR prohibition timer corresponding to the sidelink SR.

Step 404: the terminal sends the MAC PDU based on the UL grant.

In soem embodiments, the terminal determines the priority order of the logical channels of the Uu interface and the sidelink interface which triggering BSRs in any one of the following ways.

In a first way: the terminal preferentially compares a priority parameter of the logical channel of the Uu interface which triggering BSR with a first priority threshold.

When the priority parameter of the logical channel of the Uu interface which triggering BSR is lower than the first priority threshold, it is determined that the priority of the logical channel of the Uu interface which triggering BSR is higher than the priority of the logical channel of the sidelink interface which triggering BSR.

When the priority parameter of the logical channel of the Uu interface which triggering BSR is not lower than the first priority threshold, the terminal then compares a priority parameter of the logical channel of the sidelink interface which triggering BSR with a second priority threshold, as follows:
when the priority parameter of the logical channel of the Uu interface which triggering BSR is not lower than the first priority threshold and the priority parameter of the logical channel of the sidelink interface which triggering BSR is lower than the second priority threshold, it is determined that the priority of the logical channel of the sidelink interface which triggering BSR is higher than the priority of the logical channel of the Uu interface which triggering BSR; or
when the priority parameter of the logical channel of the Uu interface which triggering BSR is not lower than the first priority threshold and the priority parameter of the logical channel of the sidelink interface which triggering BSR is not lower than the second priority threshold, it is determined that the priority of the logical channel of the Uu interface which triggering BSR is higher than the priority of the logical channel of the sidelink interface which triggering BSR.

In a second way: the terminal preferentially compares a priority parameter of the logical channel of the sidelink interface which triggering BSR with a second priority threshold.

When the priority parameter of the logical channel of the sidelink interface which triggering BSR is lower than the second priority threshold, it is determined that the priority of the logical channel of the sidelink interface which triggering BSR is higher than the priority of the logical channel of the Uu interface which triggering BSR.

When the priority parameter of the logical channel of the sidelink interface which triggering BSR is not lower than the second priority threshold, the terminal then compares a priority parameter of the logical channel of the Uu interface which triggering BSR with a first priority threshold, specifically as follows:
when the priority parameter of the logical channel of the sidelink interface which triggering BSR is not lower than the second priority threshold and the priority parameter of the logical channel of the Uu interface which triggering BSR is lower than the first priority threshold, it is determined that the priority of the logical channel of the Uu interface which triggering BSR is higher than the priority of the logical channel of the sidelink interface which triggering BSR; or
when the priority parameter of the logical channel of the sidelink interface which triggering BSR is not lower than the second priority threshold and the priority parameter of the logical channel of the Uu interface which triggering BSR is not lower than the first priority threshold, it is determined that the priority of the logical channel of the sidelink interface which triggering BSR is higher than the priority of the logical channel of the Uu interface which triggering BSR.

In some embodiments, the above-mentioned first and second priority thresholds may be a same threshold value or may be different threshold values, which is not excessively limited here.

In a third way: the terminal compares a priority parameter of the logical channel of the Uu interface which triggering BSR with a third priority threshold;
when the priority parameter of the logical channel of the Uu interface which triggering BSR is lower than the third priority threshold, it is determined that the priority of the logical channel of the Uu interface which triggering BSR is higher than the priority of the logical channel of the sidelink interface which triggering BSR; or
when the priority parameter of the logical channel of the Uu interface which triggering BSR is not lower than the third priority threshold, it is determined that the priority of the logical channel of the sidelink interface which triggering BSR is higher than the priority of the logical channel of the Uu interface which triggering BSR.

In a fourth way: the terminal compares a priority parameter of the logical channel of the sidelink interface which triggering BSR with a fourth priority threshold;
when the priority parameter of the logical channel of the sidelink interface which triggering BSR is lower than the fourth priority threshold, it is determined that the priority of the logical channel of the sidelink interface which triggering BSR is higher than the priority of the logical channel of the Uu interface which triggering BSR; or
when the priority parameter of the logical channel of the sidelink interface which triggering BSR is not lower than the fourth priority threshold, it is determined that the priority of the logical channel of the Uu interface which triggering BSR is higher than the priority of the logical channel of the sidelink interface which triggering BSR.

The first priority threshold and the third priority threshold in some embodiments may be a same threshold value or different threshold values, the second priority threshold and the fourth priority threshold in some embodiments may be a same threshold value or different threshold values, and the third priority threshold and the fourth priority threshold in some embodiments may be a same threshold value or different threshold values, which are not excessively limited here.

The first priority threshold, the second priority threshold, the third priority threshold and the fourth priority threshold in some embodiments may be configured by the network device, or pre-configured, or specified by the protocol standard, which is not excessively limited here.

After determining the priority order of the logical channels of the Uu interface and the sidelink interface which triggering BSRs in any one of the above ways, the terminal sends BSRs according to the priority order of the logical channels of the Uu interface and the sidelink interface which triggering BSRs. The specific cases of sending BSRs are as follows:
Case 1: sending a BSR of the Uu interface preferentially, when the priority of the logical channel of the Uu interface which triggering BSR is higher than the priority of the logical channel of the sidelink interface which triggering BSR; or
Case 2: sending a BSR of the sidelink interface preferentially, when the priority of the logical channel of the sidelink interface which triggering BSR is higher than the priority of the logical channel of the Uu interface which triggering BSR; or
Case 3: sending a BSR of the Uu interface and a BSR of the sidelink interface randomly, when the priority of the logical channel of the Uu interface which triggering BSR is same as the priority of the logical channel of the sidelink interface which triggering BSR.

For example, the terminal generates a random number between 0 and 1. If the random number is lower than 0.5, the BSR of the Uu interface will be sent preferentially; otherwise, the BSR of the sidelink interface will be sent preferentially.

The priority parameters of the logical channels of the Uu interface and the sidelink interface defined in this embodiment are shown in Table 1.

**Table 1**

| Priority parameter in RLC bearer configuration information corresponding to SRB or DRB of Uu interface | Priority parameter in RLC bearer configuration information corresponding to SRB or DRB of sidelink interface |
|---|---|
| 0-1 | 0 |
| 2-3 | 1 |
| 4-5 | 2 |
| 6-7 | 3 |
| 8-9 | 4 |
| 10-11 | 5 |
| 12-13 | 6 |
| 14-15 | 7 |

Here, Signalling Radio Bearer (SRB); Data Radio Bearer (DRB); Radio Link Control (RLC).

With reference to Table 1, the process in which the terminal determines the priority order of the logical channels of the Uu interface and the sidelink interface which triggering BSRs in the above first way will be illustrated:
for example, the first priority threshold is configured as 6 and the second priority threshold is configured as 3;
when the priority parameter of the logical channel of the Uu interface which triggering BSR is 2, it is determined that the priority of the logical channel of the Uu interface which triggering BSR is higher than the priority of the logical channel of the sidelink interface which triggering BSR according to the fact that 2 is lower than 6; or
when the priority parameter of the logical channel of the Uu interface which triggering BSR is 10 and the priority parameter of the logical channel of the sidelink interface which triggering BSR is 1, it is determined that the priority of the logical channel of the sidelink interface which triggering BSR is higher than the priority of the logical channel of the Uu interface which triggering BSR according to the fact that 10 is greater than 2 and 1 is lower than 3; or
when the priority parameter of the logical channel of the Uu interface which triggering BSR is 10 and the priority parameter of the logical channel of the sidelink interface which triggering BSR is 6, it is determined that the priority of the logical channel of the Uu interface which triggering BSR is higher than the priority of the logical channel of the sidelink interface which triggering BSR according to the fact that 10 is greater than 2 and 6 is greater than 3.

With reference to Table 1, the process in which the terminal determines the priority order of the logical channels of the Uu interface and the sidelink interface which triggering BSRs in the above second way will be illustrated:
for example, the first priority threshold is configured as 6 and the second priority threshold is configured as 3;
when the priority parameter of the logical channel of the sidelink interface which triggering BSR is 1, it is determined that the priority of the logical channel of the sidelink interface which triggering BSR is higher than the priority of the logical channel of the Uu interface which triggering BSR according to the fact that 1 is lower than 3; or
when the priority parameter of the logical channel of the sidelink interface which triggering BSR is 5 and the priority parameter of the logical channel of the Uu interface which triggering BSR is 2, it is determined that the priority of the logical channel of the Uu interface which triggering BSR is higher than the priority of the logical channel of the sidelink interface which triggering BSR according to the fact that 5 is greater than 3 and 2 is lower than 6.

When the priority parameter of the logical channel of the sidelink interface which triggering BSR is 5 and the priority parameter of the logical channel of the Uu interface which triggering BSR is 8, it is determined that the priority of the logical channel of the sidelink interface which triggering BSR is higher than the priority of the logical channel of the Uu interface which triggering BSR according to the fact that 5 is greater than 3 and 8 is greater than 6.

With reference to Table 1, the process in which the terminal determines the priority order of the logical channels of the Uu interface and the sidelink interface which triggering BSRs in the above third way will be specifically illustrated:
for example, the third priority threshold is configured as 6;
when the priority parameter of the logical channel of the Uu interface which triggering BSR is 2, it is determined that the priority of the logical channel of the Uu interface which triggering BSR is higher than the priority of the logical channel of the sidelink interface which triggering BSR according to the fact that 2 is lower than 6; or
when the priority parameter of the logical channel of the Uu interface which triggering BSR is 10, it is determined that the priority of the logical channel of the sidelink interface which triggering BSR is higher than the priority of the logical channel of the Uu interface which triggering BSR according to the fact that 10 is greater than 6.

With reference to Table 1, the process in which the terminal determines the priority order of the logical channels of the Uu interface and the sidelink interface which triggering BSRs in the above fourth way will be specifically illustrated:
for example, the fourth priority threshold is configured as 3;
when the priority parameter of the logical channel of the sidelink interface which triggering BSR is 1, it is determined that the priority of the logical channel of the sidelink interface which triggering BSR is higher than the priority of the logical channel of the Uu interface which triggering BSR according to the fact that 1 is lower than 3; or
when the priority parameter of the logical channel of the sidelink interface which triggering BSR is 5, it is determined that the priority of the logical channel of the Uu interface which triggering BSR is higher than the priority of the logical channel of the sidelink interface which triggering BSR according to the fact that 5 is greater than 3.

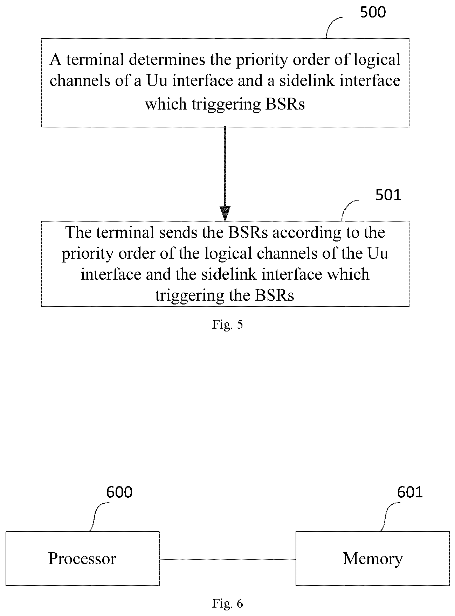

As shown in Fig. 5, embodiments of the present application provide a method for Buffer Status reporting, including:
Step 500: a terminal determines the priority order of logical channels of a Uu interface and a sidelink interface which triggering BSRs; and
Step 501: the terminal sends the BSRs according to the priority order of the logical channels of the Uu interface and the sidelink interface which triggering the BSRs.

In some embodiments, the step in which the terminal determines the priority order of the logical channels of the Uu interface and the sidelink interface which triggering the BSRs, includes:
the terminal compares a priority parameter of a logical channel of the Uu interface which triggering BSR with a first priority threshold, and/or compares a priority parameter of a logical channel of the sidelink interface which triggering BSR with a second priority threshold; and
the terminal determines the priority order of the logical channels of the Uu interface and the sidelink interface which triggering the BSRs according to a result of the comparing.

In some embodiments, the step in which the terminal determines the priority order of the logical channels of the Uu interface and the sidelink interface which triggering the BSRs according to the result of the comparing, includes:
determining that a priority of the logical channel of the Uu interface which triggering BSR is higher than a priority of the logical channel of the sidelink interface which triggering BSR, when the priority parameter of the logical channel of the Uu interface which triggering BSR is lower than the first priority threshold; or
determining that a priority of the logical channel of the sidelink interface which triggering BSR is higher than a priority of the logical channel of the Uu interface which triggering BSR, when the priority parameter of the logical channel of the Uu interface which triggering BSR is not lower than the first priority threshold and the priority parameter of the logical channel of the sidelink interface which triggering BSR is lower than the second priority threshold; or
determining that a priority of the logical channel of the Uu interface which triggering BSR is higher than a priority of the logical channel of the sidelink interface which triggering BSR, when the priority parameter of the logical channel of the Uu interface which triggering BSR is not lower than the first priority threshold and the priority parameter of the logical channel of the sidelink interface which triggering BSR is not lower than the second priority threshold.

In some embodiments, the step in which the terminal determines the priority order of the logical channels of the Uu interface and the sidelink interface which triggering the BSRs according to the result of the comparing, includes:
determining that a priority of the logical channel of the sidelink interface which triggering BSR is higher than a priority of the logical channel of the Uu interface which triggering BSR, when the priority parameter of the logical channel of the sidelink interface which triggering BSR is lower than the second priority threshold; or
determining that a priority of the logical channel of the Uu interface which triggering BSR is higher than a priority of the logical channel of the sidelink interface which triggering BSR, when the priority parameter of the logical channel of the sidelink interface which triggering BSR is not lower than the second priority threshold and the priority parameter of the logical channel of the Uu interface which triggering BSR is lower than the first priority threshold; or
determining that a priority of the logical channel of the sidelink interface which triggering BSR is higher than a priority of the logical channel of the Uu interface which triggering BSR, when the priority parameter of the logical channel of the sidelink interface which triggering BSR is not lower than the second priority threshold and the priority parameter of the logical channel of the Uu interface which triggering BSR is not lower than the first priority threshold.

In some embodiments, the step in which the terminal determines the priority order of the logical channels of the Uu interface and the sidelink interface which triggering the BSRs, includes:
the terminal compares a priority parameter of a logical channel of the Uu interface which triggering BSR with a third priority threshold;
determining that a priority of the logical channel of the Uu interface which triggering BSR is higher than a priority of the logical channel of the sidelink interface which triggering BSR, when the priority parameter of the logical channel of the Uu interface which triggering BSR is lower than the third priority threshold; or
determining that a priority of the logical channel of the sidelink interface which triggering BSR is higher than a priority of the logical channel of the Uu interface which triggering BSR, when the priority parameter of the logical channel of the Uu interface which triggering BSR is not lower than the third priority threshold.

In some embodiments, the step in which the terminal determines the priority order of the logical channels of the Uu interface and the sidelink interface which triggering the BSRs, includes:
the terminal compares a priority parameter of a logical channel of the sidelink interface which triggering BSR with a fourth priority threshold;
determining that a priority of the logical channel of the sidelink interface which triggering BSR is higher than a priority of the logical channel of the Uu interface which triggering BSR, when the priority parameter of the logical channel of the sidelink interface which triggering BSR is lower than the fourth priority threshold; or
determining that a priority of the logical channel of the Uu interface which triggering BSR is higher than a priority of the logical channel of the sidelink interface which triggering BSR, when the priority parameter of the logical channel of the sidelink interface which triggering BSR is not lower than the fourth priority threshold.

In some embodiments, the step in which the terminal sends the BSRs according to the priority order of the logical channels of the Uu interface and the sidelink interface which triggering the BSRs, includes:
sending a BSR of the Uu interface preferentially, when the priority of the logical channel of the Uu interface which triggering BSR is higher than the priority of the logical channel of the sidelink interface which triggering BSR; or
sending a BSR of the sidelink interface preferentially, when the priority of the logical channel of the sidelink interface which triggering BSR is higher than the priority of the logical channel of the Uu interface which triggering BSR; or
sending a BSR of the Uu interface and a BSR of the sidelink interface randomly, when the priority of the logical channel of the Uu interface which triggering BSR is same as the priority of the logical channel of the sidelink interface which triggering BSR.

Based on the same inventive concept, embodiments of the present application further provide a terminal for Buffer Status reporting. Since this terminal is a terminal corresponding to the method in embodiments of the present application and the principle of this terminal to solve the problem is similar to that of the method, the implementations of this terminal can refer to the implementations of the method, and the repeated description thereof will be omitted here.

As shown in Fig. 6, the terminal includes: a processor 600 and a memory 601, where the memory 601 is configured to store a program executable by the processor 600, and the processor 600 is configured to read the program in the memory 601 and perform the following steps:
determining a priority order of logical channels of a Uu interface and a sidelink interface which triggering BSRs; and
sending the BSRs according to the priority order of the logical channels of the Uu interface and the sidelink interface which triggering the BSRs.

In some embodiments, the processor 600 is configured to:
compare a priority parameter of a logical channel of the Uu interface which triggering BSR with a first priority threshold, and/or compare a priority parameter of a logical channel of the sidelink interface which triggering BSR with a second priority threshold; and
determine the priority order of the logical channels of the Uu interface and the sidelink interface which triggering the BSRs according to a result of the comparing.

In some embodiments, the processor 600 is configured to:
determine that a priority of the logical channel of the Uu interface which triggering BSR is higher than a priority of the logical channel of the sidelink interface which triggering BSR, when the priority parameter of the logical channel of the Uu interface which triggering BSR is lower than the first priority threshold; or
determine that a priority of the logical channel of the sidelink interface which triggering BSR is higher than a priority of the logical channel of the Uu interface which triggering BSR, when the priority parameter of the logical channel of the Uu interface which triggering BSR is not lower than the first priority threshold and the priority parameter of the logical channel of the sidelink interface which triggering BSR is lower than the second priority threshold; or
determine that a priority of the logical channel of the Uu interface which triggering BSR is higher than a priority of the logical channel of the sidelink interface which triggering BSR, when the priority parameter of the logical channel of the Uu interface which triggering BSR is not lower than the first priority threshold and the priority parameter of the logical channel of the sidelink interface which triggering BSR is not lower than the second priority threshold.

In some embodiments, the processor 600 is configured to:
determine that a priority of the logical channel of the sidelink interface which triggering BSR is higher than a priority of the logical channel of the Uu interface which triggering BSR, when the priority parameter of the logical channel of the sidelink interface which triggering BSR is lower than the second priority threshold; or
determine that a priority of the logical channel of the Uu interface which triggering BSR is higher than a priority of the logical channel of the sidelink interface which triggering BSR, when the priority parameter of the logical channel of the sidelink interface which triggering BSR is not lower than the second priority threshold and the priority parameter of the logical channel of the Uu interface which triggering BSR is lower than the first priority threshold; or
determine that a priority of the logical channel of the sidelink interface which triggering BSR is higher than a priority of the logical channel of the Uu interface which triggering BSR, when the priority parameter of the logical channel of the sidelink interface which triggering BSR is not lower than the second priority threshold and the priority parameter of the logical channel of the Uu interface which triggering BSR is not lower than the first priority threshold.

In some embodiments, the processor 600 is configured to:
compare a priority parameter of a logical channel of the Uu interface which triggering BSR with a third priority threshold;
determine that a priority of the logical channel of the Uu interface which triggering BSR is higher than a priority of the logical channel of the sidelink interface which triggering BSR, when the priority parameter of the logical channel of the Uu interface which triggering BSR is lower than the third priority threshold; or
determine that a priority of the logical channel of the sidelink interface which triggering BSR is higher than a priority of the logical channel of the Uu interface which triggering BSR, when the priority parameter of the logical channel of the Uu interface which triggering BSR is not lower than the third priority threshold.

In some embodiments, the processor 600 is configured to:
compare a priority parameter of a logical channel of the sidelink interface which triggering BSR with a fourth priority threshold;
determine that a priority of the logical channel of the sidelink interface which triggering BSR is higher than a priority of the logical channel of the Uu interface which triggering BSR, when the priority parameter of the logical channel of the sidelink interface which triggering BSR is lower than the fourth priority threshold; or
determine that a priority of the logical channel of the Uu interface which triggering BSR is higher than a priority of the logical channel of the sidelink interface which triggering BSR, when the priority parameter of the logical channel of the sidelink interface which triggering BSR is not lower than the fourth priority threshold.

In some embodiments, the processor 600 is configured to:
send a BSR of the Uu interface preferentially, when the priority of the logical channel of the Uu interface which triggering BSR is higher than the priority of the logical channel of the sidelink interface which triggering BSR; or
send a BSR of the sidelink interface preferentially, when the priority of the logical channel of the sidelink interface which triggering BSR is higher than the priority of the logical channel of the Uu interface which triggering BSR; or
send a BSR of the Uu interface and a BSR of the sidelink interface randomly, when the priority of the logical channel of the Uu interface which triggering BSR is same as the priority of the logical channel of the sidelink interface which triggering BSR.

Based on the same inventive concept, embodiments of the present application further provide a device for Buffer Status reporting. Since this device is a device corresponding to the method in the embodiments of the present application and the principle of this device to solve the problem is similar to that of the method, the implementations of this device can refer to the implementations of the method, and the repeated description thereof will be omitted here.

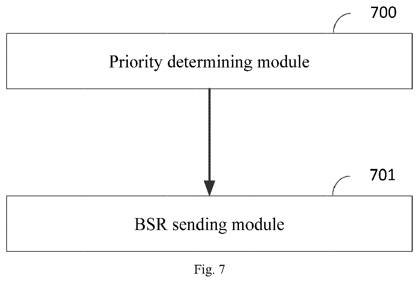

As shown in Fig. 7, the device includes a priority determining module 700 and a BSR sending module 701, where:
the priority determining module 700 is configured to determine a priority order of logical channels of a Uu interface and a sidelink interface which triggering BSRs; and
the BSR sending module 701 is configured to send the BSRs according to the priority order of the logical channels of the Uu interface and the sidelink interface which triggering the BSRs.

In some embodiments, the priority determining module 700 is configured to:
compare a priority parameter of a logical channel of the Uu interface which triggering BSR with a first priority threshold, and/or compare a priority parameter of a logical channel of the sidelink interface which triggering BSR with a second priority threshold; and
determine the priority order of the logical channels of the Uu interface and the sidelink interface which triggering the BSRs according to a result of the comparing.

In some embodiments, the priority determining module 700 is configured to:
determine that a priority of the logical channel of the Uu interface which triggering BSR is higher than a priority of the logical channel of the sidelink interface which triggering BSR, when the priority parameter of the logical channel of the Uu interface which triggering BSR is lower than the first priority threshold; or
determine that a priority of the logical channel of the sidelink interface which triggering BSR is higher than a priority of the logical channel of the Uu interface which triggering BSR, when the priority parameter of the logical channel of the Uu interface which triggering BSR is not lower than the first priority threshold and the priority parameter of the logical channel of the sidelink interface which triggering BSR is lower than the second priority threshold; or
determine that a priority of the logical channel of the Uu interface which triggering BSR is higher than a priority of the logical channel of the sidelink interface which triggering BSR, when the priority parameter of the logical channel of the Uu interface which triggering BSR is not lower than the first priority threshold and the priority parameter of the logical channel of the sidelink interface which triggering BSR is not lower than the second priority threshold.

In some embodiments, the priority determining module 700 is configured to:
determine that a priority of the logical channel of the sidelink interface which triggering BSR is higher than a priority of the logical channel of the Uu interface which triggering BSR, when the priority parameter of the logical channel of the sidelink interface which triggering BSR is lower than the second priority threshold; or
determine that a priority of the logical channel of the Uu interface which triggering BSR is higher than a priority of the logical channel of the sidelink interface which triggering BSR, when the priority parameter of the logical channel of the sidelink interface which triggering BSR is not lower than the second priority threshold and the priority parameter of the logical channel of the Uu interface which triggering BSR is lower than the first priority threshold; or
determine that a priority of the logical channel of the sidelink interface which triggering BSR is higher than a priority of the logical channel of the Uu interface which triggering BSR, when the priority parameter of the logical channel of the sidelink interface which triggering BSR is not lower than the second priority threshold and the priority parameter of the logical channel of the Uu interface which triggering BSR is not lower than the first priority threshold.

In some embodiments, the priority determining module 700 is configured to:
compare a priority parameter of a logical channel of the Uu interface which triggering BSR with a third priority threshold;
determine that a priority of the logical channel of the Uu interface which triggering BSR is higher than a priority of the logical channel of the sidelink interface which triggering BSR, when the priority parameter of the logical channel of the Uu interface which triggering BSR is lower than the third priority threshold; or
determine that a priority of the logical channel of the sidelink interface which triggering BSR is higher than a priority of the logical channel of the Uu interface which triggering BSR, when the priority parameter of the logical channel of the Uu interface which triggering BSR is not lower than the third priority threshold.

In some embodiments, the priority determining module 700 is configured to:
compare a priority parameter of a logical channel of the sidelink interface which triggering BSR with a fourth priority threshold;
determine that a priority of the logical channel of the sidelink interface which triggering BSR is higher than a priority of the logical channel of the Uu interface which triggering BSR, when the priority parameter of the logical channel of the sidelink interface which triggering BSR is lower than the fourth priority threshold; or
determine that a priority of the logical channel of the Uu interface which triggering BSR is higher than a priority of the logical channel of the sidelink interface which triggering BSR, when the priority parameter of the logical channel of the sidelink interface which triggering BSR is not lower than the fourth priority threshold.

In some embodiments, the BSR sending module 701 is configured to:
send a BSR of the Uu interface preferentially, when the priority of the logical channel of the Uu interface which triggering BSR is higher than the priority of the logical channel of the sidelink interface which triggering BSR; or
send a BSR of the sidelink interface preferentially, when the priority of the logical channel of the sidelink interface which triggering BSR is higher than the priority of the logical channel of the Uu interface which triggering BSR; or
send a BSR of the Uu interface and a BSR of the sidelink interface randomly, when the priority of the logical channel of the Uu interface which triggering BSR is same as the priority of the logical channel of the sidelink interface which triggering BSR.

Embodiments further provide a computer storage medium, where the program, when executed by a processor, implements the steps of the following method:
a terminal determines a priority order of logical channels of a Uu interface and a sidelink interface which triggering BSRs; and
the terminal sends the BSRs according to the priority order of the logical channels of the Uu interface and the sidelink interface which triggering the BSRs.

The present application has been described above by reference to the block diagrams and/or flow charts showing the methods, devices (systems) and/or computer program products according to the embodiments of the present application. It should be understood that one block shown in the block diagrams and/or flow charts and a combination of the blocks shown in the block diagrams and/or flow charts can be implemented by the computer program instructions. These computer program instructions can be provided to a general-purpose computer, a processor of a dedicated computer and/or another programmable data processing unit to produce a machine, so that the instructions executed by the computer processor and/or another programmable data processing unit create the methods for implementing the functions and/or actions specified in the blocks of the block diagrams and/or flow charts.

Accordingly, the present application can also be implemented by the hardware and/or software (including the firmware, resident software, microcode and the like). Further, the present application can adopt the form of computer program products on the computer usable or computer readable storage medium, which has the computer usable or computer readable program codes implemented in the medium, to be used by the instruction execution system or used in combination with the instruction execution system. In the context of the present application, the computer usable or computer readable storage medium can be any medium, which can contain, store, communicate with, transmit or transfer the programs, to be used by the instruction execution system, apparatus or device, or used in combination with the instruction execution system, apparatus or device.

Evidently those skilled in the art can make various modifications and variations to the present application without departing from the scope of the present application. Thus the present application is also intended to encompass these modifications and variations therein as long as these modifications and variations to the present application come into the scope of the claims of the present application.

## Claims

1. A method for Buffer Status reporting, comprising:
determining (500), by a terminal, a priority order of logical channels of a Uu interface and a sidelink interface which triggers Buffer Status reportings, BSRs; wherein the terminal compares a priority parameter of a logical channel of the Uu interface which triggers BSR with a first priority threshold, and, the terminal compares a priority parameter of a logical channel of the sidelink interface which triggers BSR with a second priority threshold, the first priority threshold and the second priority threshold are different; and the terminal determines the priority order of the logical channels of the Uu interface and the sidelink interface which triggers the BSRs according to a result of the comparing; and
sending (501), by the terminal, the BSRs according to the priority order of the logical channels of the Uu interface and the sidelink interface which triggers the BSRs.

2. The method according to claim 1, wherein the determining, by the terminal, the priority order of the logical channels of the Uu interface and the sidelink interface which triggers the BSRs according to the result of the comparing, comprises:
determining that a priority of the logical channel of the Uu interface which triggers BSR is higher than a priority of the logical channel of the sidelink interface which triggers BSR, when the priority parameter of the logical channel of the Uu interface which triggers BSR is lower than the first priority threshold; or
determining that a priority of the logical channel of the sidelink interface which triggers BSR is higher than a priority of the logical channel of the Uu interface which triggers BSR, when the priority parameter of the logical channel of the Uu interface which triggers BSR is not lower than the first priority threshold and the priority parameter of the logical channel of the sidelink interface which triggers BSR is lower than the second priority threshold; or
determining that a priority of the logical channel of the Uu interface which triggers BSR is higher than a priority of the logical channel of the sidelink interface which triggers BSR, when the priority parameter of the logical channel of the Uu interface which triggers BSR is not lower than the first priority threshold and the priority parameter of the logical channel of the sidelink interface which triggers BSR is not lower than the second priority threshold.

3. The method according to claim 1, wherein the determining, by the terminal, the priority order of the logical channels of the Uu interface and the sidelink interface which triggers the BSRs according to the result of the comparing, comprises:
determining that a priority of the logical channel of the sidelink interface which triggers BSR is higher than a priority of the logical channel of the Uu interface which triggers BSR, when the priority parameter of the logical channel of the sidelink interface which triggers BSR is lower than the second priority threshold; or
determining that a priority of the logical channel of the Uu interface which triggers BSR is higher than a priority of the logical channel of the sidelink interface which triggers BSR, when the priority parameter of the logical channel of the sidelink interface which triggers BSR is not lower than the second priority threshold and the priority parameter of the logical channel of the Uu interface which triggers BSR is lower than the first priority threshold; or
determining that a priority of the logical channel of the sidelink interface which triggers BSR is higher than a priority of the logical channel of the Uu interface which triggers BSR, when the priority parameter of the logical channel of the sidelink interface which triggers BSR is not lower than the second priority threshold and the priority parameter of the logical channel of the Uu interface which triggers BSR is not lower than the first priority threshold.

4. The method according to claim 1, wherein the determining, by the terminal, the priority order of the logical channels of the Uu interface and the sidelink interface which triggers the BSRs, comprises:
comparing, by the terminal, a priority parameter of a logical channel of the Uu interface which triggers BSR with a third priority threshold;
determining that a priority of the logical channel of the Uu interface which triggers BSR is higher than a priority of the logical channel of the sidelink interface which triggers BSR, when the priority parameter of the logical channel of the Uu interface which triggers BSR is lower than the third priority threshold; or
determining that a priority of the logical channel of the sidelink interface which triggers BSR is higher than a priority of the logical channel of the Uu interface which triggers BSR, when the priority parameter of the logical channel of the Uu interface which triggers BSR is not lower than the third priority threshold.

5. The method according to claim 1, wherein the determining, by the terminal, the priority order of the logical channels of the Uu interface and the sidelink interface which triggers the BSRs, comprises:
comparing, by the terminal, a priority parameter of a logical channel of the sidelink interface which triggers BSR with a fourth priority threshold;
determining that a priority of the logical channel of the sidelink interface which triggers BSR is higher than a priority of the logical channel of the Uu interface which triggers BSR, when the priority parameter of the logical channel of the sidelink interface which triggers BSR is lower than the fourth priority threshold; or
determining that a priority of the logical channel of the Uu interface which triggers BSR is higher than a priority of the logical channel of the sidelink interface which triggers BSR, when the priority parameter of the logical channel of the sidelink interface which triggers BSR is not lower than the fourth priority threshold.

6. The method according to any one of claims 1 to 5, wherein the sending, by the terminal, the BSRs according to the priority order of the logical channels of the Uu interface and the sidelink interface which triggers the BSRs, comprises:
sending a BSR of the Uu interface, when the priority of the logical channel of the Uu interface which triggers BSR is higher than the priority of the logical channel of the sidelink interface which triggers BSR; or
sending a BSR of the sidelink interface, when the priority of the logical channel of the sidelink interface which triggers BSR is higher than the priority of the logical channel of the Uu interface which triggers BSR; or
sending a BSR of the Uu interface and a BSR of the sidelink interface randomly, when the priority of the logical channel of the Uu interface which triggers BSR is same as the priority of the logical channel of the sidelink interface which triggers BSR.

7. A device for Buffer Status reporting, comprising a priority determining module (700) and a BSR sending module, wherein:
the priority determining module (700) is configured to determine a priority order of logical channels of a Uu interface and a sidelink interface which triggers Buffer Status reportings, BSRs; and
the BSR sending module (701) is configured to send the BSRs according to the priority order of the logical channels of the Uu interface and the sidelink interface which triggers the BSRs;
the priority determining module (700) is further configured to:
compare a priority parameter of a logical channel of the Uu interface which triggers BSR with a first priority threshold, and compare a priority parameter of a logical channel of the sidelink interface which triggers BSR with a second priority threshold; wherein the first priority threshold and the second priority threshold are different; and
determine the priority order of the logical channels of the Uu interface and the sidelink interface which triggers the BSRs according to a result of the comparing.

8. The device according to claim 7, wherein the priority determining module (700) is configured to:
determine that a priority of the logical channel of the Uu interface which triggers BSR is higher than a priority of the logical channel of the sidelink interface which triggers BSR, when the priority parameter of the logical channel of the Uu interface which triggers BSR is lower than the first priority threshold; or
determine that a priority of the logical channel of the sidelink interface which triggers BSR is higher than a priority of the logical channel of the Uu interface which triggers BSR, when the priority parameter of the logical channel of the Uu interface which triggers BSR is not lower than the first priority threshold and the priority parameter of the logical channel of the sidelink interface which triggers BSR is lower than the second priority threshold; or
determine that a priority of the logical channel of the Uu interface which triggers BSR is higher than a priority of the logical channel of the sidelink interface which triggers BSR, when the priority parameter of the logical channel of the Uu interface which triggers BSR is not lower than the first priority threshold and the priority parameter of the logical channel of the sidelink interface which triggers BSR is not lower than the second priority threshold.

9. The device according to claim 7, wherein the priority determining module (700) is configured to:
determine that a priority of the logical channel of the sidelink interface which triggers BSR is higher than a priority of the logical channel of the Uu interface which triggers BSR, when the priority parameter of the logical channel of the sidelink interface which triggers BSR is lower than the second priority threshold; or
determine that a priority of the logical channel of the Uu interface which triggers BSR is higher than a priority of the logical channel of the sidelink interface which triggers BSR, when the priority parameter of the logical channel of the sidelink interface which triggers BSR is not lower than the second priority threshold and the priority parameter of the logical channel of the Uu interface which triggers BSR is lower than the first priority threshold; or
determine that a priority of the logical channel of the sidelink interface which triggers BSR is higher than a priority of the logical channel of the Uu interface which triggers BSR, when the priority parameter of the logical channel of the sidelink interface which triggers BSR is not lower than the second priority threshold and the priority parameter of the logical channel of the Uu interface which triggers BSR is not lower than the first priority threshold.

10. The device according to claim 7, wherein the priority determining module (700) is configured to:
compare a priority parameter of a logical channel of the Uu interface which triggers BSR with a third priority threshold;
determine that a priority of the logical channel of the Uu interface which triggers BSR is higher than a priority of the logical channel of the sidelink interface which triggers BSR, when the priority parameter of the logical channel of the Uu interface which triggers BSR is lower than the third priority threshold; or
determine that a priority of the logical channel of the sidelink interface which triggers BSR is higher than a priority of the logical channel of the Uu interface which triggers BSR, when the priority parameter of the logical channel of the Uu interface which triggers BSR is not lower than the third priority threshold.

11. The device according to claim 7, wherein the priority determining module (700) is configured to:
compare a priority parameter of a logical channel of the sidelink interface which triggers BSR with a fourth priority threshold;
determine that a priority of the logical channel of the sidelink interface which triggers BSR is higher than a priority of the logical channel of the Uu interface which triggers BSR, when the priority parameter of the logical channel of the sidelink interface which triggers BSR is lower than the fourth priority threshold; or
determine that a priority of the logical channel of the Uu interface which triggers BSR is higher than a priority of the logical channel of the sidelink interface which triggers BSR, when the priority parameter of the logical channel of the sidelink interface which triggers BSR is not lower than the fourth priority threshold.

12. The device according to any one of claims 7 to 10, wherein the BSR sending module (701) is configured to:
send a BSR of the Uu interface, when the priority of the logical channel of the Uu interface which triggers BSR is higher than the priority of the logical channel of the sidelink interface which triggers BSR; or
send a BSR of the sidelink interface, when the priority of the logical channel of the sidelink interface which triggers BSR is higher than the priority of the logical channel of the Uu interface which triggers BSR; or
send a BSR of the Uu interface and a BSR of the sidelink interface randomly, when the priority of the logical channel of the Uu interface which triggers BSR is same as the priority of the logical channel of the sidelink interface which triggers BSR.

13. A computer storage medium storing a computer program thereon, wherein the program, when executed by a processor, implements the method of any one of claims 1 to 6.

## Patentansprüche

1. Verfahren zum Melden eines Pufferstatus, umfassend:
Ermitteln (500), durch ein Endgerät, einer Prioritätsreihenfolge von logischen Kanälen einer Uu-Schnittstelle und einer Sidelink-Schnittstelle, welche die Pufferstatusberichte, BSRs, triggern; wobei das Endgerät einen Prioritätsparameter eines logischen Kanals der Uu-Schnittstelle, die einen BSR triggert, mit einem ersten Prioritätsschwellenwert vergleicht, und wobei das Endgerät einen Prioritätsparameter eines logischen Kanals der Sidelink-Schnittstelle, die einen BSR triggert, mit einem zweiten Prioritätsschwellenwert vergleicht, wobei der erste Prioritätsschwellenwert und der zweite Prioritätsschwellenwert verschieden sind; und
wobei das Endgerät die Prioritätsreihenfolge der logischen Kanäle der Uu-Schnittstelle und der Sidelink-Schnittstelle, welche die BSRs triggern, gemäß einem Ergebnis des Vergleichens ermittelt; und
Senden (501), durch das Endgerät, der BSRs gemäß der Prioritätsreihenfolge der logischen Kanäle der Uu-Schnittstelle und der Sidelink-Schnittstelle, welche die BSRs triggern.

2. Verfahren nach Anspruch 1, wobei das Ermitteln, durch das Endgerät, der Prioritätsreihenfolge der logischen Kanäle der Uu-Schnittstelle und der Sidelink-Schnittstelle, welche die BSRs triggern, gemäß dem Ergebnis des Vergleichens, umfasst:
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Uu-Schnittstelle, die einen BSR triggert, niedriger als der erste Prioritätsschwellenwert ist; oder
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Uu-Schnittstelle, die einen BSR triggert, nicht niedriger als der erste Prioritätsschwellenwert ist, und wenn der Prioritätsparameter des logischen Kanals der Sidelink-Schnittstelle, die einen BSR triggert, niedriger als der zweite Prioritätsschwellenwert ist; oder
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Uu-Schnittstelle, die einen BSR triggert, nicht niedriger als der erste Prioritätsschwellenwert ist, und wenn der Prioritätsparameter des logischen Kanals der Sidelink-Schnittstelle, die einen BSR triggert, nicht niedriger als der zweite Prioritätsschwellenwert ist.

3. Verfahren nach Anspruch 1, wobei das Ermitteln, durch das Endgerät, der Prioritätsreihenfolge der logischen Kanäle der Uu-Schnittstelle und der Sidelink-Schnittstelle, welche die BSRs triggern, gemäß dem Ergebnis des Vergleichens, umfasst:
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Sidelink-Schnittstelle, die einen BSR triggert, niedriger als der zweite Prioritätsschwellenwert ist; oder
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Sidelink-Schnittstelle, die einen BSR triggert, nicht niedriger als der zweite Prioritätsschwellenwert ist, und wenn der Prioritätsparameter des logischen Kanals der Uu-Schnittstelle, die einen BSR triggert, niedriger als der erste Prioritätsschwellenwert ist; oder
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Sidelink-Schnittstelle, die einen BSR triggert, nicht niedriger als der zweite Prioritätsschwellenwert ist, und wenn der Prioritätsparameter des logischen Kanals der Uu-Schnittstelle, die einen BSR triggert, nicht niedriger als der erste Prioritätsschwellenwert ist.

4. Verfahren nach Anspruch 1, wobei das Ermitteln, durch das Endgerät, der Prioritätsreihenfolge der logischen Kanäle der Uu-Schnittstelle und der Sidelink-Schnittstelle, welche die BSRs triggern, umfasst:
Vergleichen, durch das Endgerät, eines Prioritätsparameters eines logischen Kanals der Uu-Schnittstelle, die einen BSR triggert, mit einem dritten Prioritätsschwellenwert;
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Uu-Schnittstelle, die einen BSR triggert, niedriger als der dritte Prioritätsschwellenwert ist; oder
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Uu-Schnittstelle, die einen BSR triggert, nicht niedriger als der dritte Prioritätsschwellenwert ist.

5. Verfahren nach Anspruch 1, wobei das Ermitteln, durch das Endgerät, der Prioritätsreihenfolge der logischen Kanäle der Uu-Schnittstelle und der Sidelink-Schnittstelle, welche die BSRs triggern, umfasst:
Vergleichen, durch das Endgerät, eines Prioritätsparameters eines logischen Kanals der Sidelink-Schnittstelle, die einen BSR triggert, mit einem vierten Prioritätsschwellenwert;
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Sidelink-Schnittstelle, die einen BSR triggert, niedriger als der vierte Prioritätsschwellenwert ist; oder
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Sidelink-Schnittstelle, die einen BSR triggert, nicht niedriger als der vierte Prioritätsschwellenwert ist.

6. Verfahren nach einem der Ansprüche 1 bis 5, wobei das Senden, durch das Endgerät, der BSRs gemäß der Prioritätsreihenfolge der logischen Kanäle der Uu-Schnittstelle und der Sidelink-Schnittstelle, welche die BSRs triggern, umfasst:
Senden eines BSR der Uu-Schnittstelle, wenn die Priorität des logischen Kanals der Uu-Schnittstelle, die einen BSR triggert, höher ist als die Priorität des logischen Kanals der Sidelink-Schnittstelle, die einen BSR triggert; oder
Senden eines BSR der Sidelink-Schnittstelle, wenn die Priorität des logischen Kanals der Sidelink-Schnittstelle, die einen BSR triggert, höher ist als die Priorität des logischen Kanals der Uu-Schnittstelle, die einen BSR triggert; oder
zufälliges Senden eines BSR der Uu-Schnittstelle und eines BSR der Sidelink-Schnittstelle, wenn die Priorität des logischen Kanals der Uu-Schnittstelle, die einen BSR triggert, gleich der Priorität des logischen Kanals der Sidelink-Schnittstelle ist, die einen BSR triggert.

7. Vorrichtung zum Melden eines Pufferstatus, die ein Prioritätsermittlungsmodul (700) und ein BSR-Sendemodul umfasst, wobei:
das Prioritätsermittlungsmodul (700) konfiguriert ist zum Ermitteln einer Prioritätsreihenfolge von logischen Kanälen einer Uu-Schnittstelle und einer Sidelink-Schnittstelle, die Pufferstatusberichte, BSRs, triggern; und
das BSR-Sendemodul (701) konfiguriert ist zum Senden der BSRs gemäß der Prioritätsreihenfolge der logischen Kanäle der Uu-Schnittstelle und der Sidelink-Schnittstelle, welche die BSRs triggern;
das Prioritätsbestimmungsmodul (700) ferner konfiguriert ist zum:
Vergleichen eines Prioritätsparameters eines logischen Kanals der Uu-Schnittstelle, die einen BSR triggert, mit einem ersten Prioritätsschwellenwert und Vergleichen eines Prioritätsparameters eines logischen Kanals der Sidelink-Schnittstelle, die einen BSR triggert, mit einem zweiten Prioritätsschwellenwert; wobei der erste Prioritätsschwellenwert und der zweite Prioritätsschwellenwert verschieden sind; und
Ermitteln der Prioritätsreihenfolge der logischen Kanäle der Uu-Schnittstelle und der Sidelink-Schnittstelle, welche die BSRs triggern, gemäß einem Ergebnis des Vergleichs.

8. Vorrichtung nach Anspruch 7, wobei das Ermittlungsmodul (700) ferner konfiguriert ist zum:
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Uu-Schnittstelle, die einen BSR triggert, niedriger als der erste Prioritätsschwellenwert ist; oder
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Uu-Schnittstelle, die einen BSR triggert, nicht niedriger als der erste Prioritätsschwellenwert ist, und wenn der Prioritätsparameter des logischen Kanals der Sidelink-Schnittstelle, die einen BSR triggert, niedriger als der zweite Prioritätsschwellenwert ist; oder
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Uu-Schnittstelle, die einen BSR triggert, nicht niedriger als der erste Prioritätsschwellenwert ist, und wenn der Prioritätsparameter des logischen Kanals der Sidelink-Schnittstelle, die einen BSR triggert, nicht niedriger als der zweite Prioritätsschwellenwert ist.

9. Vorrichtung nach Anspruch 7, wobei das Ermittlungsmodul (700) ferner konfiguriert ist zum:
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Sidelink-Schnittstelle, die einen BSR triggert, niedriger als der zweite Prioritätsschwellenwert ist; oder
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Sidelink-Schnittstelle, die einen BSR triggert, nicht niedriger als der zweite Prioritätsschwellenwert ist, und wenn der Prioritätsparameter des logischen Kanals der Uu-Schnittstelle, die einen BSR triggert, niedriger als der erste Prioritätsschwellenwert ist; oder
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Sidelink-Schnittstelle, die einen BSR triggert, nicht niedriger als der zweite Prioritätsschwellenwert ist, und wenn der Prioritätsparameter des logischen Kanals der Uu-Schnittstelle, die einen BSR triggert, nicht niedriger als der erste Prioritätsschwellenwert ist.

10. Vorrichtung nach Anspruch 7, wobei das Ermittlungsmodul (700) ferner konfiguriert ist zum:
Vergleichen eines Prioritätsparameters eines logischen Kanals der Uu-Schnittstelle, die einen BSR triggert, mit einem dritten Prioritätsschwellenwert;
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Uu-Schnittstelle, die einen BSR triggert, niedriger als der dritte Prioritätsschwellenwert ist; oder
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Uu-Schnittstelle, die einen BSR triggert, nicht niedriger als der dritte Prioritätsschwellenwert ist.

11. Vorrichtung nach Anspruch 7, wobei das Ermittlungsmodul (700) ferner konfiguriert ist zum:
Vergleichen eines Prioritätsparameters eines logischen Kanals der Sidelink-Schnittstelle, die einen BSR triggert, mit einem vierten Prioritätsschwellenwert;
Ermitteln, dass eine Priorität des logischen Kanals der Sidelink-Schnittstelle, die einen BSR triggert, höher ist als eine Priorität des logischen Kanals der Uu-Schnittstelle, die einen BSR triggert, wenn der Prioritätsparameter des logischen Kanals der Sidelink-Schnittstelle, die einen BSR triggert, niedriger als der vierte Prioritätsschwellenwert ist; oder
Ermitteln, dass eine Priorität des logischen Kanals der Uu-Schnittstelle, die einen BSR triggert, höher ist als eine Priorität des logischen Kanals der Sidelink-Schnittstelle, die einen BSR triggert, wenn der Prioritätsparameter des logischen Kanals der Sidelink-Schnittstelle, die einen BSR triggert, nicht niedriger als der vierte Prioritätsschwellenwert ist.

12. Vorrichtung nach einem der Ansprüche 7 bis 10, wobei das BSR-Sendemodul (701) konfiguriert ist zum:
Senden eines BSR der Uu-Schnittstelle, wenn die Priorität des logischen Kanals der Uu-Schnittstelle, die einen BSR triggert, höher ist als die Priorität des logischen Kanals der Sidelink-Schnittstelle, die einen BSR triggert; oder
Senden eines BSR der Sidelink-Schnittstelle, wenn die Priorität des logischen Kanals der Sidelink-Schnittstelle, die einen BSR triggert, höher ist als die Priorität des logischen Kanals der Uu-Schnittstelle, die einen BSR triggert; oder
zufälliges Senden eines BSR der Uu-Schnittstelle und eines BSR der Sidelink-Schnittstelle, wenn die Priorität des logischen Kanals der Uu-Schnittstelle, der einen BSR triggert, gleich der Priorität des logischen Kanals der Sidelink-Schnittstelle ist, der einen BSR triggert.

13. Computerspeichermedium, in dem ein Computerprogramm gespeichert ist, wobei das Programm, wenn es von einem Prozessor ausgeführt wird, das Verfahren nach einem der Ansprüche 1 bis 6 implementiert.

## Revendications

1. Procédé de signalement d'état de tampon, comprenant :
la détermination (500), par un terminal, d'un ordre de priorité de canaux logiques d'une interface Uu et d'une interface de liaison latérale qui déclenchent des rapports d'état de tampon, BSR ; le terminal comparant un paramètre de priorité d'un canal logique de l'interface Uu qui déclenche un BSR à un premier seuil de priorité, et le terminal comparant un paramètre de priorité d'un canal logique de l'interface de liaison latérale qui déclenche un BSR à un deuxième seuil de priorité, le premier seuil de priorité et le deuxième seuil de priorité étant différents ; et le terminal déterminant l'ordre de priorité des canaux logiques de l'interface Uu et de l'interface de liaison latérale qui déclenchent les BSR selon un résultat de la comparaison ; et
l'envoi (501), par le terminal, des BSR selon l'ordre de priorité des canaux logiques de l'interface Uu et de l'interface de liaison latérale qui déclenchent les BSR.

2. Procédé selon la revendication 1, dans lequel la détermination, par le terminal, de l'ordre de priorité des canaux logiques de l'interface Uu et de l'interface de liaison latérale qui déclenchent les BSR selon le résultat de la comparaison comprend :
la détermination qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface Uu qui déclenche un BSR est inférieur au premier seuil de priorité ; ou
la détermination qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface Uu qui déclenche un BSR n'est pas inférieur au premier seuil de priorité et que le paramètre de priorité du canal logique de l'interface de liaison latérale qui déclenche un BSR est inférieur au deuxième seuil de priorité ; ou
la détermination qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface Uu qui déclenche un BSR n'est pas inférieur au premier seuil de priorité et que le paramètre de priorité du canal logique de l'interface de liaison latérale qui déclenche un BSR n'est pas inférieur au deuxième seuil de priorité.

3. Procédé selon la revendication 1, dans lequel la détermination, par le terminal, de l'ordre de priorité des canaux logiques de l'interface Uu et de l'interface de liaison latérale qui déclenchent les BSR selon le résultat de la comparaison comprend :
la détermination qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface de liaison latérale qui déclenche un BSR est inférieur au deuxième seuil de priorité ; ou
la détermination qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface de liaison latérale qui déclenche un BSR n'est pas inférieur au deuxième seuil de priorité et que le paramètre de priorité du canal logique de l'interface Uu qui déclenche un BSR est inférieur au premier seuil de priorité ; ou
la détermination qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface de liaison latérale qui déclenche un BSR n'est pas inférieur au deuxième seuil de priorité et que le paramètre de priorité du canal logique de l'interface Uu qui déclenche un BSR n'est pas inférieur au premier seuil de priorité.

4. Procédé selon la revendication 1, dans lequel la détermination, par le terminal, de l'ordre de priorité des canaux logiques de l'interface Uu et de l'interface de liaison latérale qui déclenchent les BSR comprend :
la comparaison, par le terminal, d'un paramètre de priorité d'un canal logique de l'interface Uu qui déclenche un BSR à un troisième seuil de priorité ;
la détermination qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface Uu qui déclenche un BSR est inférieur au troisième seuil de priorité ; ou
la détermination qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface Uu qui déclenche un BSR n'est pas inférieur au troisième seuil de priorité.

5. Procédé selon la revendication 1, dans lequel la détermination, par le terminal, de l'ordre de priorité des canaux logiques de l'interface Uu et de l'interface de liaison latérale qui déclenchent les BSR comprend :
la comparaison, par le terminal, d'un paramètre de priorité d'un canal logique de l'interface de liaison latérale qui déclenche un BSR à un quatrième seuil de priorité ;
la détermination qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface de liaison latérale qui déclenche un BSR est inférieur au quatrième seuil de priorité ; ou
la détermination qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface de liaison latérale qui déclenche un BSR n'est pas inférieur au quatrième seuil de priorité.

6. Procédé selon l'une quelconque des revendications 1 à 5, dans lequel l'envoi, par le terminal, des BSR selon l'ordre de priorité des canaux logiques de l'interface Uu et de l'interface de liaison latérale qui déclenchent les BSR comprend :
l'envoi d'un BSR de l'interface Uu, lorsque la priorité du canal logique de l'interface Uu qui déclenche un BSR est supérieure à la priorité du canal logique de l'interface de liaison latérale qui déclenche un BSR ; ou
l'envoi d'un BSR de l'interface de liaison latérale, lorsque la priorité du canal logique de l'interface de liaison latérale qui déclenche un BSR est supérieure à la priorité du canal logique de l'interface Uu qui déclenche un BSR ; ou
l'envoi aléatoire d'un BSR de l'interface Uu et d'un BSR de l'interface de liaison latérale, lorsque la priorité du canal logique de l'interface Uu qui déclenche un BSR est la même que la priorité du canal logique de l'interface de liaison latérale qui déclenche un BSR.

7. Dispositif de signalement d'état de tampon, comprenant un module de détermination de priorité (700) et un module d'envoi de BSR, dans lequel :
le module de détermination de priorité (700) est configuré pour déterminer un ordre de priorité de canaux logiques d'une interface Uu et d'une interface de liaison latérale qui déclenchent des rapports d'état de tampon, BSR ; et
le module d'envoi de BSR (701) est configuré pour envoyer les BSR selon l'ordre de priorité des canaux logiques de l'interface Uu et de l'interface de liaison latérale qui déclenchent les BSR ;
le module de détermination de priorité (700) est en outre configuré pour :
comparer un paramètre de priorité d'un canal logique de l'interface Uu qui déclenche un BSR à un premier seuil de priorité, et comparer un paramètre de priorité d'un canal logique de l'interface de liaison latérale qui déclenche un BSR à un deuxième seuil de priorité ; le premier seuil de priorité et le deuxième seuil de priorité étant différents ; et
déterminer l'ordre de priorité des canaux logiques de l'interface Uu et de l'interface de liaison latérale qui déclenchent les BSR selon un résultat de la comparaison.

8. Dispositif selon la revendication 7, dans lequel le module de détermination de priorité (700) est configuré pour :
déterminer qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface Uu qui déclenche un BSR est inférieur au premier seuil de priorité ; ou
déterminer qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface Uu qui déclenche un BSR n'est pas inférieur au premier seuil de priorité et que le paramètre de priorité du canal logique de l'interface de liaison latérale qui déclenche un BSR est inférieur au deuxième seuil de priorité ; ou
déterminer qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface Uu qui déclenche un BSR n'est pas inférieur au premier seuil de priorité et que le paramètre de priorité du canal logique de l'interface de liaison latérale qui déclenche un BSR n'est pas inférieur au deuxième seuil de priorité.

9. Dispositif selon la revendication 7, dans lequel le module de détermination de priorité (700) est configuré pour :
déterminer qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface de liaison latérale qui déclenche un BSR est inférieur au deuxième seuil de priorité ; ou
déterminer qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface de liaison latérale qui déclenche un BSR n'est pas inférieur au deuxième seuil de priorité et que le paramètre de priorité du canal logique de l'interface Uu qui déclenche un BSR est inférieur au premier seuil de priorité ; ou
déterminer qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface de liaison latérale qui déclenche un BSR n'est pas inférieur au deuxième seuil de priorité et que le paramètre de priorité du canal logique de l'interface Uu qui déclenche un BSR n'est pas inférieur au premier seuil de priorité.

10. Dispositif selon la revendication 7, dans lequel le module de détermination de priorité (700) est configuré pour :
comparer un paramètre de priorité d'un canal logique de l'interface Uu qui déclenche un BSR à un troisième seuil de priorité ;
déterminer qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface Uu qui déclenche un BSR est inférieur au troisième seuil de priorité ; ou
déterminer qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface Uu qui déclenche un BSR n'est pas inférieur au troisième seuil de priorité.

11. Dispositif selon la revendication 7, dans lequel le module de détermination de priorité (700) est configuré pour :
comparer un paramètre de priorité d'un canal logique de l'interface de liaison latérale qui déclenche un BSR à un quatrième seuil de priorité ;
déterminer qu'une priorité du canal logique de l'interface de liaison latérale qui déclenche un BSR est supérieure à une priorité du canal logique de l'interface Uu qui déclenche un BSR, lorsque le paramètre de priorité du canal logique de l'interface de liaison latérale qui déclenche un BSR est inférieur au quatrième seuil de priorité ; ou
déterminer qu'une priorité du canal logique de l'interface Uu qui déclenche un BSR est supérieure à une priorité du canal logique de l'interface de liaison latérale qui déclenche un BSR, lorsque le paramètre de priorité du canal logique de l'interface de liaison latérale qui déclenche un BSR n'est pas inférieur au quatrième seuil de priorité.

12. Dispositif selon l'une quelconque des revendications 7 à 10, dans lequel le module d'envoi de BSR (701) est configuré pour :
envoyer un BSR de l'interface Uu, lorsque la priorité du canal logique de l'interface Uu qui déclenche un BSR est supérieure à la priorité du canal logique de l'interface de liaison latérale qui déclenche un BSR ; ou
envoyer un BSR de l'interface de liaison latérale, lorsque la priorité du canal logique de l'interface de liaison latérale qui déclenche un BSR est supérieure à la priorité du canal logique de l'interface Uu qui déclenche un BSR ; ou
envoyer aléatoirement un BSR de l'interface Uu et un BSR de l'interface de liaison latérale, lorsque la priorité du canal logique de l'interface Uu qui déclenche un BSR est la même que la priorité du canal logique de l'interface de liaison latérale qui déclenche un BSR.

13. Support de stockage informatique sur lequel est stocké un programme informatique qui, lorsqu'il est exécuté par un processeur, met en œuvre le procédé selon l'une quelconque des revendications 1 à 6.
